# EUROPEAN PATENT APPLICATION

(11) **EP 1 680 998 A1**
(43) Date of publication of application: **19.07.2006**
(21) Application number: 05111864.4
(22) Date of filing: 08.12.2005
(51) Int. Cl.: A47J 37/07, A47J 37/06

(54) **Cooking apparatus**

(30) Priority: 13.01.2005 KR 2005003312
(71) Applicant: Samsung Electronics Co., Ltd., Suwon-si, Gyeonggi-Do (KR)
(72) Inventor: LEE, Byoung-in, Yeongtong-gu, Suwon-si, Gyeonggi-do (KR); KIM, Dong-won, Jangan-gu, Suwon-si, Gyeonggi-do (KR); NA, Seon-uk, Yongin-si, Gyeonggi-do (KR); KWON, Yong-hyun, Suwon-si, Gyeonggi-do (KR); JANG, Seong-deog, Yeongtong-gu, Suwon-si, Gyeonggi-do (KR); KIM, Chul, Yongin-si, Gyeonggi-do (KR)
(74) Representative: Grey, Ian Michael

(57) **Abstract**

A cooking apparatus having a grill part (10) to cook food thereon, and a grill housing (20) coupled with the grill part. The cooking apparatus includes an electric heater (30) provided in a middle region of the grill housing below the grill part (10), and a grill reflecting member (40) for reflecting heat generated from the electric heater to the grill part. The cooking apparatus has improved cooking efficiency of heat generated from the electric heater being efficiently transmitted to food.

## Description

The present invention relates to a cooking apparatus comprising a grill, a housing containing at least one electric heating element disposed beneath the grill, and a heat reflecting member disposed adjacent to the at least one electric heating element.

"Grilling" refers to a method of broiling meats, fish or other food on a gridiron or directly roasting skewered meat or fish on the fire and can be done with a device using electricity or gas, etc. An electric grill device cooks food using heat generated by an electric heater and conventionally includes a main body having a grill part directly contacting and cooking food. Heat generated by the electric heater is generally reflected to the grill part by a grill reflecting member. Such a conventional grill device is disclosed in Korean Patent First Publication No. 2004-39155 which includes a box-shaped main body, a plurality of heating members provided inside the main body, a grill member disposed in an upper part of the main body and a heat reflection member disposed in a lower part of the main body for transmitting radiant heat from the heating member to the grill member.

However, conventional cooking devices suffer a problem when the heating members are disposed on side walls of the main body in that heat is also transmitted to the side walls of the main body.

Therefore, the cooking efficiency of a cooking device could be improved if a greater proportion of the heat generated by the heating members is efficiently transmitted to the heat reflection member for cooking food instead of to the side walls of the main body.

Accordingly, it is an object of the present invention to provide a cooking apparatus that substantially alleviates or overcomes the problems mentioned above.

Accordingly, present invention is characterised in that the at least one electric heating element is spaced from the side walls of the housing and the heat reflecting member is configured to reflect heat generated from either side of the electric heating element to the underside of the grill.

In a preferred embodiment, the heat reflecting member includes reflective faces angled upwardly away from each side of the or each electric heating element.

The preferred embodiment comprises one electrical heating element and wherein the heat reflecting member is generally 'W'-shaped in cross-section, the heating element being positioned along the middle ridge of the heat reflecting member. However, an alternative preferred embodiment comprises two electrical heating elements and wherein the cross-section of the heat reflecting member is generally shaped as two 'W'-shaped sections side by side, one heating element being positioned along the middle ridge of each 'W'-shaped section of the heat reflecting member, respectively.

Preferably, the or each electrical heating element is disposed in a retaining aperture in the heat reflecting member or alternatively, the or each electrical heating element is disposed in a retaining recess formed in the heat reflecting member.

Advantageously, the cooking apparatus further comprises an oil catch tray provided below the heat reflecting member, wherein the heat reflecting member includes at least one aperture formed therethrough to allow oil and/or other liquid residues from the food being cooked to pass though the heat reflecting member into the oil catch tray below.

The present invention also provides a cooking apparatus having a grill part to cook food thereon, and a grill housing coupled with the grill part, the cooking apparatus including an electric heater provided in a middle region of the grill housing to be disposed at a lower side of the grill part, and a grill reflecting member reflecting heat generated from the electric heater to the grill part.

In a preferred embodiment, the grill reflecting member includes at least a pair of reflection faces disposed in a direction of emitting the heat from the electric heater, to reflect the heat generated from the electric heater to the grill part.

The electric heater is preferably mounted between the pair of reflection faces in a middle region of the grill reflecting member.

Preferably, the pair of reflection faces are disposed to slope downward to the electric heater.

The grill reflecting member conveniently includes a supporting part supporting the electric heater in the middle region of the grill reflecting member.

In a preferred embodiment, the cooking apparatus further includes an oil collector disposed at a lower side of the grill reflecting member to collect oil, wherein the grill reflecting member includes an oil guiding hole guiding oil to the oil collector, disposed in sides with respect to of the supporting part.

The grill reflecting member preferably includes a W-shaped section and preferably the supporting part includes a groove recessed in the pair of reflection faces.

The pair of reflection faces are advantageously disposed such that the electric heater is mounted between each reflection face, to thereby reflect heat generated from the electric heater to the grill part in a bent manner.

The present invention also provides a cooking apparatus having a grill part to cook food thereon, and a grill housing coupled with the grill part, the cooking apparatus including a pair of electric heaters disposed at a lower side of the grill part, in a middle region of the grill housing to generate heat for cooking food, a grill reflecting member reflecting heat generated from the electric heaters to the grill part, wherein a portion of the heat generated by the electric heaters is directly transmitted to the grill part, and a remaining portion of the generated heat is reflecting by the grill reflecting member and then transmitted to the grill part.

The grill reflecting member preferably includes pairs of reflection faces, wherein each electric heater is mounted between each pair of reflection faces.

A preferred embodiment of the present invention will now be described, by way of example only, with reference to the accompanying drawings, in which:
Figure 1 is an exploded perspective view illustrating a cooking apparatus according to an embodiment of the present invention;
Figure 2 is an exploded perspective view illustrating a grill part and a grill housing of the cooking apparatus of Figure 1;
Figure 3 is a sectional view of the cooking apparatus taken along line III-III of Figure 2 to illustrate the assembly of the grill part and the grill housing; and
Figure 4 is a sectional view of the assembly of a grill part and a grill housing of a cooking apparatus according to another embodiment of the present invention.

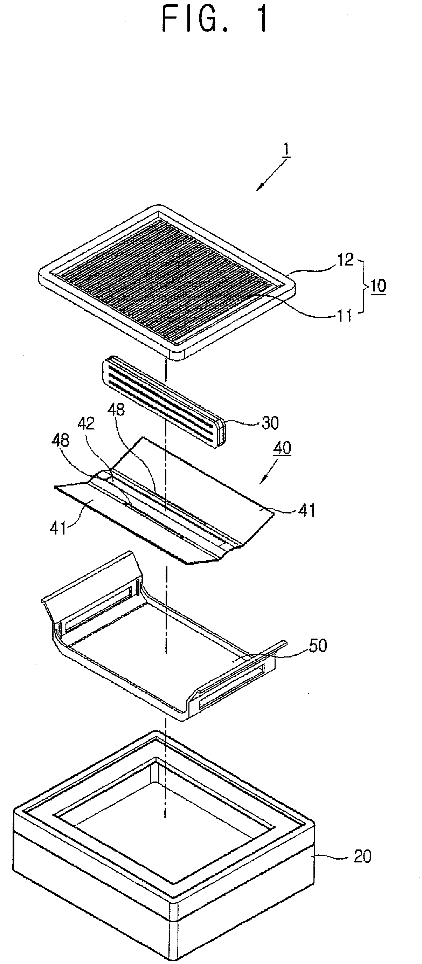

Referring now to Figure 1, a cooking apparatus 1 is shown according to an embodiment of the present invention comprising a grill part 10 on which food is cooked, and a grill housing 20 coupled with and supporting a lower part of the grill part 10, receiving therein various components described in more detail below.

The grill part 10 for directly contacting and cooking food is coupled with an upper part of the grill housing 20. The grill part 10 comprises a plurality of spaced grill bars 11 and a support frame 12 supporting the plurality of grill bars 11 around its edge.

The grill housing 20 has an opening therein and defines a heating space within the grill housing 20. An electric heater 30 and a grill reflecting member 40 for reflecting heat from the electric heater 30 to the grill part 10 are provided inside the grill housing 20. An oil collector 50 is provided below the grill reflecting member 40 for collecting oil.

The electric heater 30 is mounted in a middle region inside the grill housing 20 beneath the grill part 10 and the ends of the electric heater 30 are supported by respective opposite side walls of the grill housing 20. Therefore, since only the end portions of the electric heater 30 are in contact with the grill housing 20 and the main side faces are exposed, a high proportion of the heat generated by the electric heater 30 is transmitted to the grill part 10 by the grill reflecting member 40.

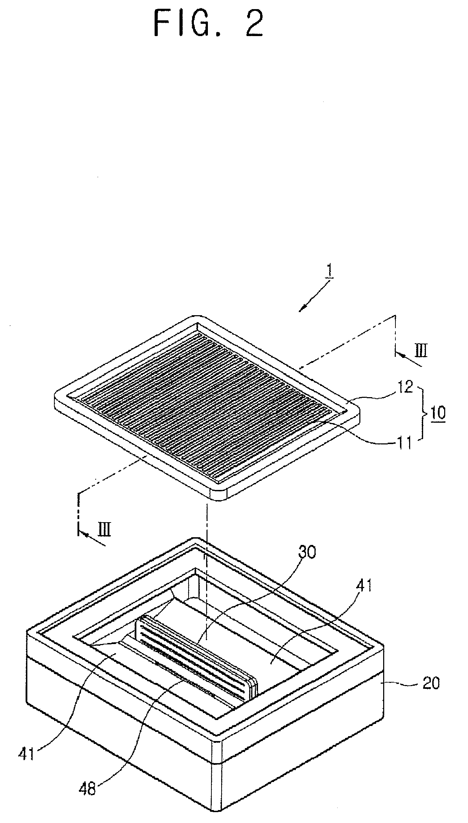

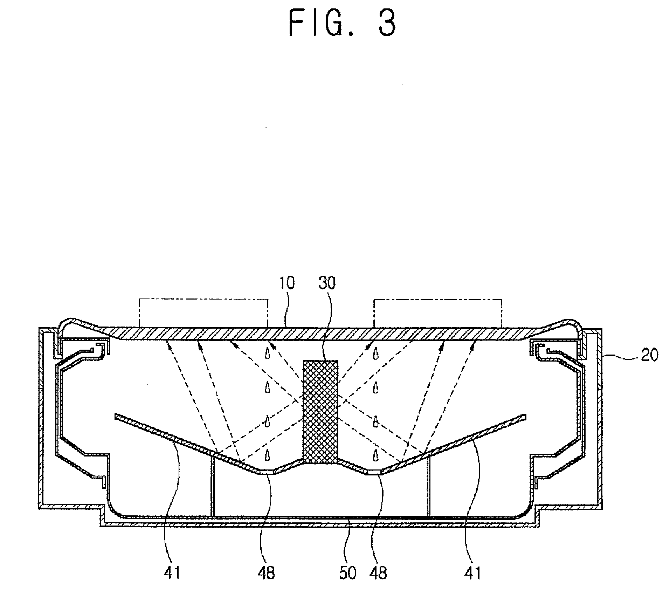

Referring now to Figures 2 and 3, the grill reflecting member 40 is approximately W-shaped in cross-section and is made of a metallic material having an efficient thermal conductivity and reflectivity so as to efficiently reflect the heat generated from the electric heater 30 and then transmit it to the grill part 10.

The grill reflecting member 40 comprises a pair of reflection faces 41 and includes a supporting hole 42 which supports a lower portion of the electric heater 30 such that the electric heater 30 is positioned between the pair of the reflection faces 41. An oil guiding hole 48 for guiding the oil or residues coming out of food being cooked to the oil collector 50 is provided in each of the troughs of the W-shaped grill reflecting member 40 either side of the supporting hole 42.

Alternatively, the supporting hole 42 may comprise a grooved recess between the reflection faces 41 or as a further alternative, a separate member (not shown) may be used to support the electric heater 30 on the grill reflecting member 40.

It will be apparent from the above description and the drawings that the pair of reflection faces 41 are positioned and angled such that heat emitted from both lateral sides of the electric heater 30 is reflected to the grill part 10.

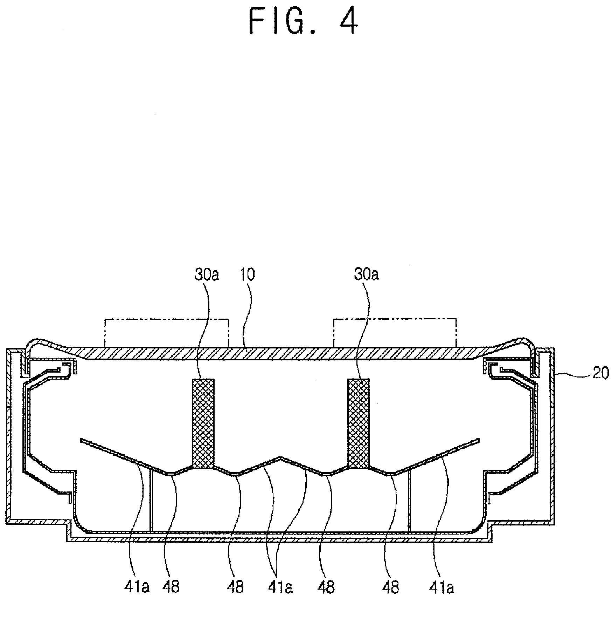

The above described embodiment comprises one single electric heater 30 provided between the pair of reflection faces 41 in the centre of the grill housing 20. However, an alternative embodiment is illustrated in Figure 4 comprising two pairs of reflection faces 41a, wherein each pair of reflection faces 41a includes an electric heater 30a mounted therebetween.

A cooking process of the cooking apparatus of the invention will now be described.

Referring to Figures 3 and 4, the oil collector 50 is disposed below the grill reflecting member 40. The electric heaters 30,30a are disposed above the grill reflecting member 40 and the grill part 10 is mounted in the upper part of the grill housing 20 and so when the electric heaters 30,30a generate heat to cook food on the grill part 10, some of the heat is directly transmitted to the grill part 10, and the rest of the heat is transmitted to the grill part 10 by reflection in the pair of reflection faces 41,41a disposed either side of the electric heaters 30,30a. Any oil that comes out of food being cooked is guided to the oil collector 50 through the oil guiding hole 48 of the grill reflecting member 40.

Due to the configuration of the above described cooking apparatus having the electric heaters 30,30a disposed between a pair of reflection faces 41,41a in the middle region of the grill housing 20, heat generated from the electric heaters 30,30a is prevented from being unnecessarily transmitted to the side walls of the grill housing 20 and instead is transmitted to the food being cooked, thereby improving the cooking efficiency.

Although a few embodiments of the present invention have been shown and described, it will be appreciated by those skilled in the art that changes may be made in these embodiments without departing from the principles of the invention, the scope of which is defined in the appended claims hereafter.

## Claims

1. A cooking apparatus comprising a grill, a housing containing at least one electric heating element disposed beneath the grill, and a heat reflecting member disposed adjacent to the at least one electric heating element, **characterised in that** the at least one electric heating element is spaced from the side walls of the housing and the heat reflecting member is configured to reflect heat generated from either side of the electric heating element to the underside of the grill.

2. A cooking apparatus according to claim 1 wherein the heat reflecting member includes reflective faces angled upwardly away from each side of the or each electric heating element.

3. A cooking apparatus according to claim 1 or claim 2 comprising one electrical heating element and wherein the heat reflecting member is generally 'W'-shaped in cross-section, the heating element being positioned along the middle ridge of the heat reflecting member.

4. A cooking apparatus according to claim 1 or claim 2 comprising two electrical heating elements and wherein the cross-section of the heat reflecting member is generally shaped as two 'W'-shaped sections side by side, one heating element being positioned along the middle ridge of each 'W'-shaped section of the heat reflecting member, respectively.

5. A cooking apparatus according to any preceding claim, wherein the or each electrical heating element is disposed in a retaining aperture in the heat reflecting member.

6. A cooking apparatus according to any of claims 1 - 4 wherein the or each electrical heating element is disposed in a retaining recess formed in the heat reflecting member.

7. A cooking apparatus according to any preceding claim further comprising an oil catch tray provided below the heat reflecting member, wherein the heat reflecting member includes at least one aperture formed therethrough to allow oil and/or other liquid residues from the food being cooked to pass though the heat reflecting member into the oil catch tray below.

8. A cooking apparatus having a grill part to cook food thereon, and a grill housing coupled with the grill part, the cooking apparatus comprising an electric heater provided in a middle region of the grill housing to be disposed at a lower side of the grill part and a grill reflecting member reflecting heat generated from the electric heater to the grill part.

9. The cooking apparatus according to claim 8 wherein the grill reflecting member comprises at least a pair of reflection faces disposed in a direction of emitting the heat from the electric heater, to reflect the heat generated from the electric heater to the grill part.

10. The cooking apparatus according to claim 9 wherein the electric heater is mounted between the pair of reflection faces in a middle region of the grill reflecting member.

11. The cooking apparatus according to claim 10 wherein the pair of reflection faces are disposed to slope downward to the electric heater.

12. The cooking apparatus according to claim 11 wherein the grill reflecting member includes a supporting part supporting the electric heater in the middle region of the grill reflecting member.

13. The cooking apparatus according to claim 12 further comprising an oil collector disposed at a lower side of the grill reflecting member to colleting oil, wherein the grill reflecting member comprises an oil guiding hole guiding oil to the oil collector, disposed in sides with respect to of the supporting part.

14. The cooking apparatus of claim 8 wherein the grill reflecting member comprises a W-shaped section.

15. The cooking apparatus of claim 12 wherein the supporting part comprises a groove recessed in the pair of reflection faces.

16. The cooking apparatus of claim 9 wherein the pair of reflection faces are disposed such that the electric heater is mounted between each reflection face, to thereby reflect heat generated from the electric heater to the grill part in a bent manner.

17. A cooking apparatus having a grill part to cook food thereon, and a grill housing coupled with the grill part, the cooking apparatus comprising a pair of electric heaters disposed at a lower side of the grill part, in a middle region of the grill housing to generate heat for cooking food, a grill reflecting member reflecting heat generated from the electric heaters to the grill part wherein a portion of the heat generated by the electric heaters is directly transmitted to the grill part, and a remaining portion of the generated heat is reflecting by the grill reflecting member and then transmitted to the grill part.

18. The cooking apparatus of claim 17 wherein the grill reflecting member comprises pairs of reflection faces, wherein each electric heater is mounted between each pair of reflection faces.
